# EUROPEAN PATENT APPLICATION

(11) **EP 4 826 957 A1**
(43) Date of publication of application: **21.10.2026**
(21) Application number: 24952352.3
(22) Date of filing: 29.08.2024
(51) Int. Cl.: H02J 50/60

(54) **CONTROLLER OF WIRELESS CHARGING DEVICE, POWER SUPPLY MODULE AND ELECTRONIC DEVICE**

(71) Applicant: Huawei Technologies Co., Ltd., Shenzhen, Guangdong 518129 (CN)
(72) Inventor: WANG, Chao, Shenzhen, Guangdong 518129 (CN); LIU, Yan, Shenzhen, Guangdong 518129 (CN); LI, Yuechao, Shenzhen, Guangdong 518129 (CN); WANG, Yong, Shenzhen, Guangdong 518129 (CN)
(74) Representative: Gill Jennings & Every LLP
(86) International application number: PCT/CN2024/115557
(87) International publication number: WO 2026/044597

(57) **Abstract**

A controller used in a wireless charging device is provided. The controller is configured to measure a target parameter of the transmitting coil, where the target parameter indicates a change status of a relative position between the electronic device and the wireless charging device. The controller is further configured to: when the target parameter indicates that the relative position between the electronic device and the wireless charging device changes, stop power transmission to the electronic device, and perform foreign object detection. The controller is further configured to: when it is determined, through the foreign object detection, that there is no foreign object, resume power transmission to the electronic device. Embodiments of this application allow the wireless charging device to support both position movement and foreign object detection during power transmission, thereby ensuring that power transmission is stopped due to position movement instead of presence of a foreign object (in this application, power transmission can be resumed after only a short interruption).

## Description

### TECHNICAL FIELD

This application relates to the field of electronic technologies, and in particular, to a quality factor detection circuit and detection method based on an oscillating circuit, and an electronic device.

### BACKGROUND

As the wireless charging technology becomes popular, many wireless charging products have emerged in the market, among which mobile phone transmitters according to a wireless power consortium (wireless power consortium, WPC) Qi standard have gained the largest share.

A wireless charging product, during application, is usually in an open scenario. For example, a mobile phone having a wireless charging function is charged with a charger as an accessory, and the mobile phone and the charger are independent and separable product forms. A transmit (transport, TX) apparatus in the accessory needs to perform real-time detection and identification on a receive (receive, RX) apparatus (usually installed inside an electronic device, such as a mobile phone, having a wireless charging function) placed in the accessory; and upon identifying the receive apparatus, starts to control charging to complete transfer of electrical energy. In addition, it is also required to determine whether there is a foreign object between the transmit apparatus and the receive apparatus. If the foreign object cannot be accurately detected, the foreign object (such as a bank card or an identity card) may be damaged in a charging process, which seriously restricts development of the wireless charging industry. Therefore, foreign object detection has become a primary issue in safety of wireless charging and is also a pain point in the industry.

However, the current wireless charging has a limited foreign object detection capability and a small coverage area, and many foreign objects cannot be detected. This seriously threatens the safety of wireless charging and is extremely unfavorable for further development of the industry. At present, a foreign object detection method used is mainly a quality factor (quality factor, Q) detection method. A principle of the Q-factor detection method is: Presence of the foreign object between the transmit apparatus and the receive apparatus affects a parameter of an inductor coil of the transmit apparatus and then affects a Q factor of the inductor coil, and therefore detection of the Q factor of the inductor coil can reflect whether a foreign object is present. Therefore, accuracy of foreign object detection can be improved by improving detection precision and a detection speed of the Q factor, and how to detect the Q factor quickly with high precision has become a problem that needs to be resolved currently.

### SUMMARY

According to a first aspect, this application provides a controller used in a wireless charging device. The wireless charging device is configured to wirelessly charge an electronic device, and the resonant network includes a resonant capacitor and a transmitting coil.

An input end of the inverter circuit is configured to connect to a direct current power supply, and an output end of the inverter circuit is configured to connect to the resonant network.

The controller is configured to measure a target parameter of the transmitting coil, where the target parameter indicates a change status of a relative position between the electronic device and the wireless charging device.

The controller is further configured to: when the target parameter indicates that the relative position between the electronic device and the wireless charging device changes, stop power transmission to the electronic device, and perform foreign object detection.

The controller is further configured to: when it is determined, through the foreign object detection, that there is no foreign object, resume power transmission to the electronic device.

This embodiment of this application allows the wireless charging device to support both position movement and foreign object detection during power transmission, thereby ensuring that power transmission is stopped due to position movement instead of presence of a foreign object (in this application, power transmission can be resumed after only a short interruption).

The foreign object detection may be Q-factor detection.

This application defines a high-precision Q-factor detection procedure in power transmission, to ensure that power technology transmission is not affected after a position change. In addition, a Q factor before power transmission is more accurately calculated, thereby improving foreign object detection precision.

In a possible implementation, the target parameter is a PLOSS parameter (for example, an input current and an input voltage) or an equivalent capacitance.

In a possible implementation, the controller is further configured to: when the updated quality factor satisfies the preset condition, continue power transmission to the electronic device.

In a possible implementation, when resuming power transmission to the electronic device, the controller is specifically configured to: update a transmission parameter, and resume power transmission to the electronic device based on an updated transmission parameter.

In a possible implementation, the transmission parameter is a parameter of a calibration curve.

A calibration curve of a power transmitter is valid only when a position of a power receiver product in a working area remains unchanged. When the position or an environment changes, the parameter curve needs to be updated.

In a possible implementation, the controller is further configured to: when it is determined, through the foreign object detection, that there is a foreign object, stop power transmission to the electronic device.

According to a second aspect, this application provides a control method, applied to a wireless charging device. The wireless charging device is configured to wirelessly charge an electronic device, and the wireless charging device includes a resonant network, an inverter circuit, and a controller. The resonant network includes a resonant capacitor and a transmitting coil. An input end of the inverter circuit is configured to connect to a direct current power supply, and an output end of the inverter circuit is configured to connect to the resonant network.

The method includes:
measuring, by the controller, a target parameter of the transmitting coil, where the target parameter indicates a change status of a relative position between the electronic device and the wireless charging device;
when the target parameter indicates that the relative position between the electronic device and the wireless charging device changes, stopping power transmission to the electronic device, and performing foreign object detection; and
when it is determined, through the foreign object detection, that there is no foreign object, resuming power transmission to the electronic device.

In a possible implementation, the resuming power transmission to the electronic device includes:
updating a transmission parameter, and resuming power transmission to the electronic device based on an updated transmission parameter.

In a possible implementation, the continuing power transmission to the electronic device includes:
determining whether a relative position between the transmitting coil and a receiving coil of the electronic device changes, updating the transmission parameter when the relative position changes, and continuing power transmission to the electronic device based on the updated transmission parameter.

In a possible implementation, the transmission parameter is a parameter of a calibration curve.

In a possible implementation, the method further includes:
when it is determined, through the foreign object detection, that there is a foreign object, stopping, by the controller, power transmission to the electronic device.

According to a third aspect, this application provides a power supply module, including a resonant network, an inverter circuit, and the controller according to any one of the first aspect. The resonant network includes a transmitting coil. An input end of the inverter circuit is configured to connect to a direct current power supply, and an output end of the inverter circuit is configured to connect to the resonant network.

According to a fourth aspect, this application provides an electronic device, including the controller according to any one of the first aspect of this application.

According to a fifth aspect, this application provides an electronic device, including the power supply module according to any one of the third aspect of this application.

### BRIEF DESCRIPTION OF DRAWINGS

FIG. 1 is a diagram of an electronic device according to this application;
FIG. 2 is another diagram of an electronic device according to this application;
FIG. 3 is a diagram of a power supply module according to an embodiment of this application;
FIG. 4 is a schematic flowchart of foreign object detection according to an embodiment of this application;
FIG. 5 is a diagram of a relative position change; and
FIG. 6 is a schematic flowchart of foreign object detection according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. Persons of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The terms "substantially (substantially)", "about (about)", and the like used in this specification are approximation terms rather than degree terms, and are intended to take into account inherent deviations of measured values or calculated values that are known to persons of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

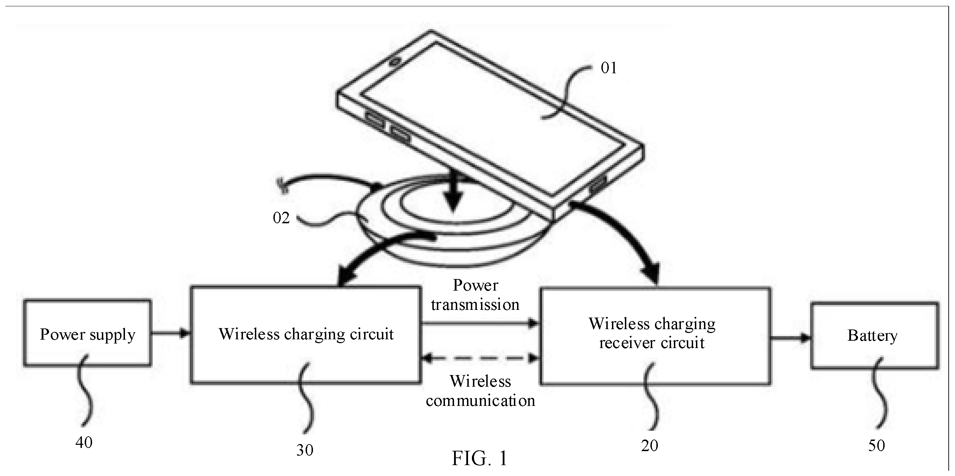

Embodiments of this application are applied to a wireless charging system. The wireless charging system includes an electronic device 01 and a charger 02 shown in FIG. 1. The charger 02 serves as a transmitter device, and the electronic device 01 serves as a receiver device. The electronic device includes a mobile phone (mobile phone), a tablet computer (pad), a computer with a wireless transceiver function, an intelligent wearable product (for example, a smartwatch or a smart band), a virtual reality (virtual reality, VR) terminal device, an augmented reality (augmented reality, AR) terminal device, and the like with a wireless device function. The electronic device may alternatively be a wirelessly-charged electric vehicle, a wirelessly-charged small household appliance (for example, a soy milk maker or a floor sweeping robot), a drone, or another electronic product. A specific form of the electronic device is not specifically limited in embodiments of this application. For ease of description, the following uses an example in which the electronic device 01 is a mobile phone shown in FIG. 1 for description.

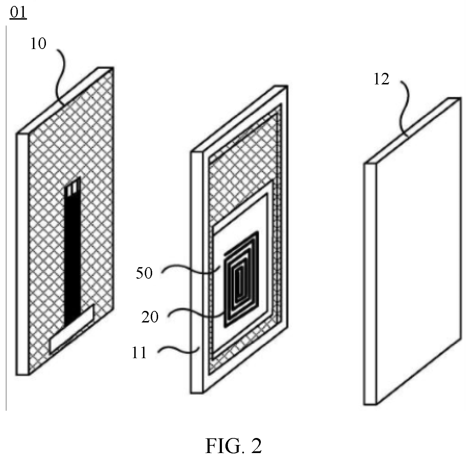

To wirelessly charge the electronic device 01, as shown in FIG. 1, a wireless charging receiver circuit 20 and a battery 50 connected to the wireless charging receiver circuit 20 are provided in the electronic device 01. For example, as shown in FIG. 2, the electronic device 01 mainly includes a display panel (display panel, DP) 10. The display panel 10 may be a liquid crystal display (liquid crystal display, LCD) or an organic light-emitting diode (organic light-emitting diode, OLED) display. This is not limited in this application. The electronic device 01 further includes a middle frame 11 and a housing 12 shown in FIG. 2. The display panel 10 and the housing 12 are respectively on two sides of the middle frame 11, the back of the display panel 10 faces the housing 12, and the display panel 10 is connected to the housing 12 via the middle frame 11. The wireless charging receiver circuit 20 and the battery 50 may be provided on a side surface, of the middle frame 11, that faces the housing 12.

The charger 02 includes a wireless charging circuit 30 disposed in the charger 02 as shown in FIG. 1, and a power supply 40 connected to the wireless charging circuit 30. The power supply 40 is used to provide electrical energy for charging. In some embodiments of this application, the power supply 40 may be a power adapter. The power supply 40 can convert an alternating current of 220 V into a direct current (for example, 5 V or 10 V) according to a requirement for charging power, and transmit the direct current to the wireless charging circuit 30.

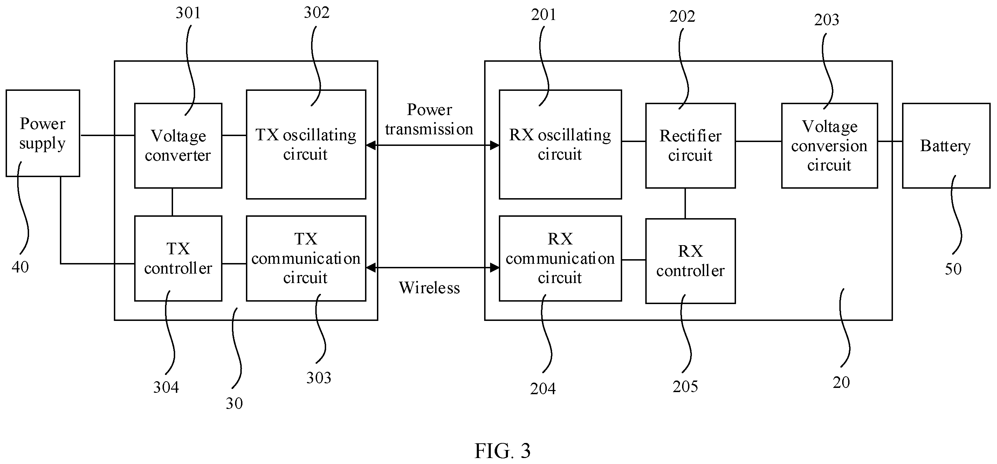

When a side on which the housing 12 of the electronic device 01 is located is placed on the charger 02, to wirelessly charge the electronic device 01, as shown in FIG. 3, the wireless charging circuit 30 includes a voltage converter 301 and a TX oscillating circuit 302. The voltage converter 301 may be a direct current (direct current, DC) to alternating current (alternating current, AC) converter, that is, a DC/AC converter. The wireless charging receiver circuit 20 further includes an RX oscillating circuit 201 and a rectifier circuit 202.

Based on this, the voltage converter 301 is connected to the power supply 40 and can convert a direct current output by the power supply 40 into an alternating current. In addition, the TX oscillating circuit 302 is connected to the voltage converter 301. After receiving the alternating current output by the voltage converter 301, the TX oscillating circuit 302 may generate an alternating magnetic field. The RX oscillating circuit 201 receives the alternating magnetic field and outputs an alternating current, so that a power from the TX oscillating circuit 301 can be transmitted to the RX oscillating circuit 201.

In addition, the RX oscillating circuit 201 is connected to the rectifier circuit 202, and the rectifier circuit 202 can rectify the alternating current output by the rectifier circuit 202 to generate a rectified voltage Vrect. Based on this, the wireless charging receive apparatus 20 further includes at least one stage of voltage conversion circuit 203 connected to the rectifier circuit 202. The voltage conversion circuit 203 may convert the rectified voltage Vrect into a charging voltage (for example, 3.7 V) for the battery 20. After the charging voltage is applied to two terminals of the battery 50, a current output by the voltage conversion circuit 203 may be used to charge the battery 50.

In some embodiments of this application, the voltage conversion circuit 203 includes a DC/DC conversion circuit. The DC/DC conversion circuit may be a buck (Buck) circuit or a switched capacitor (switched capacitor, SC) circuit. An input-output voltage ratio of the buck circuit may be flexibly adjusted. For example, the input-output voltage ratio may be set to a decimal. An input-output voltage ratio of the SC circuit is an integer. However, the SC circuit can withstand a relatively high input-output voltage difference and has relatively high voltage conversion efficiency.

In addition, to control the foregoing charging process, wireless communication may be established between the wireless charging circuit 30 and the wireless charging receiver circuit 20. In this case, as shown in FIG. 3, the wireless charging circuit 30 may include a transmitter (transmit, TX) communication circuit 303, and the wireless charging receiver circuit 20 may include a receiver (receive, RX) communication circuit 204. The TX communication circuit 303 and the RX communication circuit 204 may be wirelessly connected via Bluetooth (Bluetooth), wireless broadband (wireless-fidelity, Wi-Fi), the Zigbee (Zigbee) protocol, a radio frequency identification (radio frequency identification, RFID) technology, a long-range (long-range, Lora) wireless technology, and a near-field communication (near-field communication, NFC) technology, so that wireless communication can be established between the wireless charging circuit 30 and the wireless charging receiver circuit 20. In this way, a control signal or charging data can be transmitted between the TX communication circuit 303 and the RX communication circuit 204. The charging data may indicate a charging type. For example, the charging data may be a charging protocol, for example, a wireless charging standard Qi developed by the wireless power consortium (wireless power consortium, WPC), such as a BPP (basic power profile) protocol or an EPP (extended power profile) protocol.

### Q-factor detection (QFOD):

Q-factor detection is a process before power transmission in the Qi standard. A Q factor is an indicator for measuring a loss of a resonant cavity, and is defined as a ratio of energy stored in a coil to energy lost in each cycle. In the wireless charging system, a small amount of energy is injected into the resonant cavity to generate a resonant current, and then the Q factor is calculated by measuring attenuation of the resonant current. If there is a metal foreign object between a transmitter (TX) and a receiver (RX), energy of the resonant cavity will be absorbed, resulting in that the measured Q factor (Qm) is significantly lower than a Q factor (Qr) reported by the RX. By comparing Qm and Qr, it can be determined whether a foreign object exists in the system.

Qi standard detection process: (1) Measure baseline values *fₜ* and *Qₜ* of a resonant frequency and a quality factor of a power transmitter (charging cradle). (2) Measure a resonant frequency and a quality factor ${f}_{t}^{′}$ and ${Q}_{t}^{′}$ of a power receiver (mobile phone) (the measurement can be performed only when the power receiver is placed together with the power transmitter). (3) Measure overall reference values ${{f}_{t}^{′}}^{\left(ref\right)}$ and ${Q}_{t}^{′ \left(ref\right)}$ of the resonant frequencies and the quality factors of the power receiver (mobile phone) and the power transmitter (charging cradle) (note: the Qi standard does not specify x, y, and z positions of the mobile phone on the charging cradle). (4) Simulate Ping to perform object detection based on the Q factors, and obtain $Δ Q = {Q}_{t}^{′ \left(ref\right)} - {Q}_{t}^{′} - {Q}_{t}$ through calculation. (5) Determine whether Δ*Q* is greater than a specified threshold Δ*Q*(*thr*); and based on a determination result, determine whether a foreign object exists and whether to transmit power.

### Power loss detection (PLoss FOD):

Power loss detection is a process during power transmission in the Qi standard. It calculates the power loss (PLoss) by measuring an input power (PIn) at the transmitter and an output power (POut) at the receiver. If there is a metal foreign object in a transmission magnetic field, an additional loss will be generated. By comparing an actually measured PLoss value with a preset threshold, it can be determined whether a foreign object exists.

Qi standard detection process: PLoss FOD is continuously performed during power transmission and is applicable to the BPP (basic power configuration profile) and EPP standards. (1) Calculate an internal loss, measure a power loss ${P}_{r}^{\left(loss1&2\right)}$ of a resonant circuit and an inverter in the power transmitter, and measure a power loss ${P}_{r}^{\left(loss1&2\right)}$ of a resonant circuit and a rectifier in the power receiver. (2) Calculate a dissipation power ${P}_{FO} = {P}_{i} - {P}_{o} - {P}_{t}^{\left(loss1&2\right)} - {P}_{r}^{\left(loss1&2\right)}$ of a foreign object, where *Pᵢ* represents the input power of the power transmitter, and *Pₒ* represents the output power of the power receiver. (3) Compare *P_{FO}* with a specified power loss threshold Δ*Pᵣ* to determine whether a foreign object exists (note: the threshold Δ*Pᵣ* is mainly determined by an amplitude of a Ploss change or a capacitance change).

The current wireless charging WPC Qi standard technical solution is applicable only to a charging power below 15 W. Determining of a foreign object is inaccurate at a high power, posing safety risks. During power transmission, if a position of the receiver changes or a foreign object enters the receiver, charging will be interrupted, affecting user experience. In addition, a calibration curve of the power transmitter is valid only when the position of the receiver does not change during charging. When the position or an environment changes, charging cannot be performed.

To resolve the foregoing problem, an embodiment of this application provides a controller used in a wireless charging device. The wireless charging device is configured to wirelessly charge an electronic device, and the wireless charging device includes a resonant network, an inverter circuit, and the controller. The resonant network includes a resonant capacitor and a transmitting coil. An input end of the inverter circuit is configured to connect to a direct current power supply, and an output end of the inverter circuit is configured to connect to the resonant network.

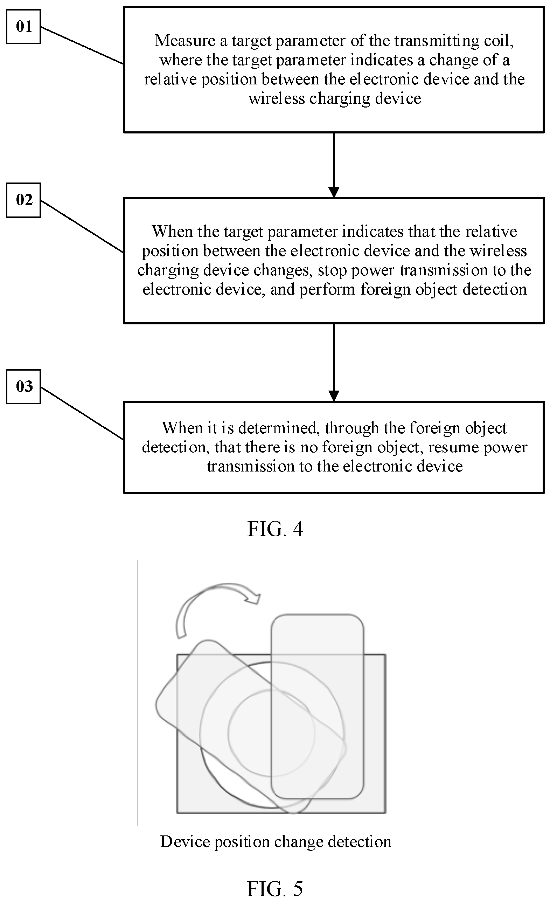

Refer to FIG. 4. The controller is configured to:
1. measure a target parameter of the transmitting coil, where the target parameter indicates a change status of a relative position between the electronic device and the wireless charging device.
2. when the target parameter indicates that the relative position between the electronic device and the wireless charging device changes, stop power transmission to the electronic device, and perform foreign object detection.
3. when it is determined, through the foreign object detection, that there is no foreign object, resume power transmission to the electronic device.

This embodiment of this application allows the wireless charging device to support both position movement and foreign object detection during power transmission, thereby ensuring that power transmission is stopped due to position movement instead of presence of a foreign object (in this application, power transmission can be resumed after only a short interruption).

The foreign object detection may be Q-factor detection.

This application defines a high-precision Q-factor detection procedure in power transmission, to ensure that power technology transmission is not affected after a position change. In addition, a Q factor before power transmission is more accurately calculated, thereby improving foreign object detection precision.

In a possible implementation, the target parameter is a PLOSS parameter (for example, an input current and an input voltage) or an equivalent capacitance.

In a possible implementation, the controller is further configured to: when the updated quality factor satisfies the preset condition, continue power transmission to the electronic device.

In a possible implementation, when resuming power transmission to the electronic device, the controller is specifically configured to: update a transmission parameter, and resume power transmission to the electronic device based on an updated transmission parameter.

In a possible implementation, the transmission parameter is a parameter of a calibration curve.

A calibration curve of a power transmitter is valid only when a position of a power receiver product in a working area remains unchanged. When the position or an environment changes, the parameter curve needs to be updated.

In a possible implementation, the controller is further configured to: when it is determined, through the foreign object detection, that there is a foreign object, stop power transmission to the electronic device.

FIG. 5 is a diagram of a position change.

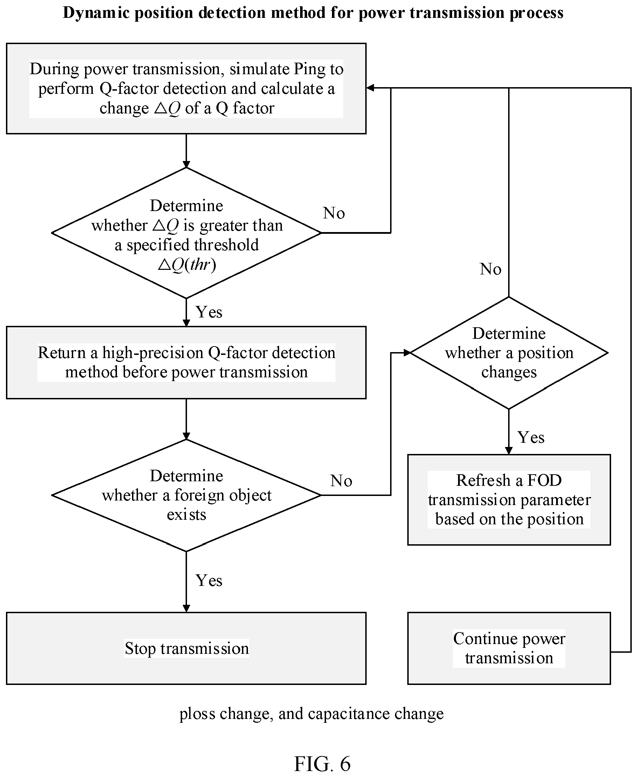

FIG. 6 is a schematic flowchart of foreign object detection.

This application further provides an electronic device, including the controller 114 provided in any embodiment of this application, or including the power supply module provided in any embodiment of this application.

In the foregoing embodiments, the method performed by the controller 114 provided in embodiments of this application is described. To implement the functions in the method provided in the foregoing embodiments of this application, the controller 114 serving as an entity for performing the method may include a hardware structure and/or a software module, and implement the foregoing functions in a form of the hardware structure, the software module, or a combination of the hardware structure and the software module. Whether a function in the foregoing functions is performed through the hardware structure, the software module, or the combination of the hardware structure and the software module depends on particular applications and design constraints of the technical solutions. It should be noted and understood that division of the modules of the foregoing apparatus is merely division of logical functions, and in an actual implementation, all or some modules may be integrated into one physical entity, or may be physically separated. In addition, all these modules may be implemented in a form of software invoked by a processing element, or may be implemented in a form of hardware. Alternatively, some modules may be implemented in a form of software invoked by a processing element, and some modules are implemented in a form of hardware. For example, the module may be a separately disposed processing element; or may be integrated in a chip of the foregoing apparatus for implementation; or may be stored in a memory of the foregoing apparatus in a form of program code, and is invoked by a processing element of the foregoing apparatus to perform the function of the determining module. Implementations of other modules are similar. In addition, all or some of the modules may be integrated, or may be implemented independently. The processing element herein may be an integrated circuit, and has a signal processing capability. In an implementation process, steps in the foregoing methods or the foregoing modules can be implemented through a hardware integrated logical circuit in the processing element, or through instructions in a form of software. For example, the foregoing modules may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of program code invoked by a processing element, the processing element may be a general-purpose processor, for example, a central processing unit (central processing unit, CPU) or another processor that can invoke the program code. For still another example, these modules may be integrated together and implemented in a form of a system-on-a-chip (system-on-a-chip, SOC).

In the foregoing embodiments, all or some of the steps performed by the controller 114 may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk solid state disk (SSD)), or the like.

This application further provides a computer-readable storage medium. The computer-readable storage medium stores computer instructions. When the computer instructions are executed, any method performed by the controller 114 in the foregoing embodiments of this application may be performed.

An embodiment of this application further provides a chip for running instructions. The chip is configured to perform any one of the methods performed by the controller 114 in this application.

An embodiment of this application further provides a computer program product. The program product includes a computer program. The computer program is stored in a storage medium. At least one processor may read the computer program from the storage medium. When the at least one processor executes the computer program, any method performed by the controller 114 in this application may be implemented.

Persons of ordinary skill in the art may understand that all or a part of the steps in the foregoing embodiments may be implemented through hardware related to program instructions. The program may be stored in a computer-readable storage medium. When the program is executed, the steps of the method embodiments are performed. The storage medium includes any medium that can store program code, for example, a ROM, a RAM, a magnetic disk, or an optical disc.

Persons of ordinary skill in the art may understand that, to facilitate description of the technical solutions of this application, embodiments of this application are separately described by using functional modules. Circuit devices in the modules may partially or completely overlap. This is not intended to limit the protection scope of this application.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A controller used in a wireless charging device, wherein the wireless charging device is configured to wirelessly charge an electronic device, and the wireless charging device comprises a resonant network, an inverter circuit, and the controller;
the resonant network comprises a resonant capacitor and a transmitting coil;
an input end of the inverter circuit is configured to connect to a direct current power supply, and an output end of the inverter circuit is configured to connect to the resonant network;
the controller is configured to measure a target parameter of the transmitting coil,
wherein the target parameter indicates a change in a relative position between the electronic device and the wireless charging device;
the controller is further configured to: when the target parameter indicates that the relative position between the electronic device and the wireless charging device changes, stop power transmission to the electronic device, and perform foreign object detection; and
the controller is further configured to: when it is determined, through the foreign object detection, that there is no foreign object, resume power transmission to the electronic device.

2. The controller according to claim 1, wherein the target parameter is a PLOSS parameter or an equivalent capacitance.

3. The controller according to claim 1 or 2, wherein when resuming power transmission to the electronic device, the controller is specifically configured to: update a transmission parameter, and resume power transmission to the electronic device based on an updated transmission parameter.

4. The controller according to any one of claims 1 to 3, wherein the transmission parameter is a parameter of a calibration curve.

5. The controller according to any one of claims 1 to 4, wherein the controller is further configured to: when it is determined, through the foreign object detection, that there is a foreign object, stop power transmission to the electronic device.

6. A control method, applied to a wireless charging device, wherein the wireless charging device is configured to wirelessly charge an electronic device, the wireless charging device comprises a resonant network, an inverter circuit, and a controller, the resonant network comprises a resonant capacitor and a transmitting coil, an input end of the inverter circuit is configured to connect to a direct current power supply, and an output end of the inverter circuit is configured to connect to the resonant network; and
the method comprises:
measuring, by the controller, a target parameter of the transmitting coil, wherein the target parameter indicates a change in a relative position between the electronic device and the wireless charging device;
when the target parameter indicates that the relative position between the electronic device and the wireless charging device changes, stopping power transmission to the electronic device, and performing foreign object detection; and
when it is determined, through the foreign object detection, that there is no foreign object, resuming power transmission to the electronic device.

7. The method according to claim 6, wherein resuming power transmission to the electronic device comprises:
updating a transmission parameter, and resuming power transmission to the electronic device based on an updated transmission parameter.

8. The method according to claim 6 or 7, wherein the transmission parameter is a parameter of a calibration curve.

9. The method according to any one of claims 6 to 8, wherein the method further comprises:
when it is determined, through the foreign object detection, that there is a foreign object, stopping, by the controller, power transmission to the electronic device.

10. A power supply module, comprising a resonant network, an inverter circuit, and the controller according to any one of claims 1 to 5, wherein the resonant network comprises a transmitting coil; and
an input end of the inverter circuit is configured to connect to a direct current power supply, and an output end of the inverter circuit is configured to connect to the resonant network.

11. An electronic device, comprising the controller according to any one of claims 1 to 5, or comprising the power supply module according to claim 10.

## Amended claims

### Amended claims under Art. 19.1 PCT

1. A wireless charging device, wherein the wireless charging device is configured to wirelessly charge an electronic device, and the wireless charging device comprises a transmitting coil;
the wireless charging device is configured to measure a target parameter of the transmitting coil, wherein the target parameter indicates a change status of a relative position between the electronic device and the wireless charging device;
the wireless charging device is further configured to: when the target parameter indicates that the relative position between the electronic device and the wireless charging device changes, stop power transmission to the electronic device, and perform foreign object detection; and
the wireless charging device is further configured to: when it is determined, through the foreign object detection, that there is no foreign object, resume power transmission to the electronic device.

2. The wireless charging device according to claim 1, wherein the target parameter is a loss difference or an equivalent capacitance.

3. The wireless charging device according to claim 1 or 2, wherein when resuming power transmission to the electronic device, the wireless charging device is specifically configured to: update a transmission parameter, and resume power transmission to the electronic device based on an updated transmission parameter.

4. The wireless charging device according to any one of claims 1 to 3, wherein the transmission parameter is a parameter of a calibration curve.

5. The wireless charging device according to any one of claims 1 to 4, wherein the wireless charging device is further configured to: when it is determined, through the foreign object detection, that there is a foreign object, stop power transmission to the electronic device.

6. A control method, applied to a wireless charging device, wherein the wireless charging device is configured to wirelessly charge an electronic device, and the wireless charging device comprises a transmitting coil; and
the method comprises:
measuring a target parameter of the transmitting coil, wherein the target parameter indicates a change status of a relative position between the electronic device and the wireless charging device;
when the target parameter indicates that the relative position between the electronic device and the wireless charging device changes, stopping power transmission to the electronic device, and performing foreign object detection; and
when it is determined, through the foreign object detection, that there is no foreign object, resuming power transmission to the electronic device.

7. The method according to claim 6, wherein the resuming power transmission to the electronic device comprises:
updating a transmission parameter, and resuming power transmission to the electronic device based on an updated transmission parameter.

8. The method according to claim 6 or 7, wherein the transmission parameter is a parameter of a calibration curve.

9. The method according to any one of claims 6 to 8, wherein the method further comprises:
when it is determined, through the foreign object detection, that there is a foreign object, stopping power transmission to the electronic device.

10. A control apparatus, used in a wireless charging device, wherein the wireless charging device is configured to wirelessly charge an electronic device, and the wireless charging device comprises a transmitting coil; and
the apparatus comprises:
a module, configured to measure a target parameter of the transmitting coil, wherein the target parameter indicates a change status of a relative position between the electronic device and the wireless charging device;
a module, configured to: when the target parameter indicates that the relative position between the electronic device and the wireless charging device changes, stop power transmission to the electronic device, and perform foreign object detection; and
a module, configured to: when it is determined, through the foreign object detection, that there is no foreign object, resume power transmission to the electronic device.

11. The apparatus according to claim 10, wherein the module configured to: when it is determined, through the foreign object detection, that there is no foreign object, resume power transmission to the electronic device is configured to:
update a transmission parameter, and resume power transmission to the electronic device based on an updated transmission parameter.

12. The apparatus according to claim 10 or 11, wherein the transmission parameter is a parameter of a calibration curve.

13. The apparatus according to any one of claims 10 to 12, wherein the module configured to: when it is determined, through the foreign object detection, that there is no foreign object, resume power transmission to the electronic device is further configured to:
when it is determined, through the foreign object detection, that there is a foreign object, stop power transmission to the electronic device.

14. A power supply module, comprising a resonant network, an inverter circuit, and the control apparatus according to any one of claims 10 to 13, wherein the resonant network comprises a transmitting coil; and
an input end of the inverter circuit is configured to connect to a direct current power supply, and an output end of the inverter circuit is configured to connect to the resonant network.

15. An electronic device, comprising the wireless charging device according to any one of claims 1 to 5, or comprising the power supply module according to claim 14.
